# EUROPÄISCHE PATENTSCHRIFT

(11) **EP 2 451 682 B1**
(45) Veröffentlichungstag und Bekanntmachung des Hinweises auf die Patenterteilung: **16.11.2016**
(21) Anmeldenummer: 10718886.4
(22) Anmeldetag: 03.05.2010
(51) Int. Cl.: B60T 8/172, B60T 7/22

(54) **VERFAHREN ZUR KORREKTEN DURCHFÜHRUNG VON AUTONOMEN NOTBREMSUNGEN BEI EINEM STRASSENFAHRZEUG**
METHOD FOR CORRECTLY CARRYING OUT AUTONOMOUS EMERGENCY BRAKING IN A ROAD VEHICLE
PROCÉDÉ DE MISE EN UVRE CORRECTE DE FREINAGES D URGENCE AUTONOMES POUR VÉHICULE ROUTIER

(30) Priorität: 09.07.2009 DE 102009032314
(43) Veröffentlichungstag der Anmeldung: 16.05.2012
(73) Patentinhaber: WABCO GmbH, 30453 Hannover (DE)
(72) Erfinder: BREUER, Karsten, 88179 Oberreute (DE); DIECKMANN, Thomas, 30982 Pattensen (DE); HOFFMANN, Guido, 82216 Maisach (DE)
(74) Vertreter: Lauerwald, Jörg
(86) Internationale Anmeldenummer: PCT/EP2010/002670
(87) Internationale Veröffentlichungsnummer: WO 2011/003487

(56) Entgegenhaltungen:
- EP-A2- 1 419 947
- DE-A1- 19 831 262
- DE-A1-102006 047 131
- DE-A1-102007 002 754
- DE-A1-102008 045 481
- DE-T2- 60 121 309
- FR-A1- 2 891 912
- GB-A- 2 406 948

## Beschreibung

Die Erfindung bezieht sich auf ein Verfahren zur korrekten Durchführung von autonomen Notbremsungen bei einem Straßenfahrzeug gemäß dem Oberbegriff des Patentanspruchs 1.

Unter einer autonomen Notbremsung bei einem Straßenfahrzeug, insbesondere einem Nutzfahrzeug, versteht man einen Bremsvorgang, der ohne Beteiligung des Fahrers automatisch gestartet wird. Hierdurch sollen Unfälle, insbesondere Auffahrunfälle, entweder ganz verhindert oder deren Folgen abgemildert werden (CMS Collision Mitigation System). Bekannte derartige Systeme (DE 3637165 A1, DE 10 2008 034 229 A1) erfassen mittels Sensoren, bspw. durch Radar oder durch Videokameras, den Raum vor dem mit dem System ausgerüsteten Fahrzeug. Aufgrund der bekannten, mittels der Raddrehzahlen bestimmten eigenen Fahrzeuggeschwindigkeit sowie der Geschwindigkeit des voran fahrenden Fahrzeugs und dessen Abstands, wobei die Abstandsdaten durch den Radarsensor erfasst werden, wird ein Gefahrenpotential bestimmt. Naturgemäß ist die Gefahr dann besonders hoch, wenn sich der Abstand zwischen den beiden Fahrzeugen schnell verringert und der Abstand unterhalb verschiedener Schwellwerte liegt. Bekannt ist weiter, für das Gefahrenpotential auch das Wetter bzw. die Straßenglätte zu berücksichtigen (DE 10 2004 022 289 A1).

Falls das genannte Gefahrenpotential eine bestimmte Schwelle überschritten hat, wird im Fahrzeug ein Warnton erzeugt, welcher dem evtl. gerade unaufmerksamen Fahrer die aktuell bestehende Gefahr signalisieren soll.

Falls das Gefahrenpotential eine weitere Schwelle übersteigt, kann eine autonome Teilbremsung des Fahrzeugs eingeleitet werden. Das bedeutet, dass ohne Zutun des Fahrers die Bremsen des Fahrzeugs mit mittlerer Kraft betätigt werden.

Falls das ermittelte Gefahrenpotential eine höchste Stufe überschreitet, kann eine autonome Vollbremsung eingeleitet werden (DE 10 2008 034 229 A1), bei welcher ohne Zutun des Fahrers die Bremsen des Fahrzeugs mit maximaler Kraft betätigt werden. Auch wenn hierdurch ein bevorstehender Unfall nicht mehr verhindert werden kann, so werden trotzdem die Unfallfolgen durch den Abbau der kinetischen Energie des eigenen Fahrzeugs stark vermindert.

Bei derartigen autonomen Bremsungen kann es, insbesondere bei starken Verzögerungswerten oder bei ungünstigen Witterungsverhältnissen, also glatter Straße, dazu kommen, dass die Räder des eigenen Fahrzeugs in einen Schlupfzustand geraten. Dabei kann auch ein im Fahrzeug befindliches ABS (Antiblockier-System) in Aktion treten und einzelne Räder zeitweilig vom Bremsdruck entlasten. In jedem Fall hat dieser Zustand zur Folge, dass eine genaue Fahrzeuggeschwindigkeit über die Radgeschwindigkeiten nicht mehr bestimmt werden kann, da die Radgeschwindigkeiten in Folge des Schlupfes nicht mehr der Fahrzeuggeschwindigkeit entsprechen. Damit kann aber auch die Geschwindigkeit des Vorderfahrzeuges, dessen Abstand von einem Abstandssensor, meist einem Radarsensor, gemessen wird, nicht mehr exakt bestimmt werden. Das gleiche gilt, wenn zur Ermittlung der Eigen- und Vorderfahrzeuggeschwindigkeit nicht die Radgeschwindigkeiten, sondern die Getriebeausgangsdrehzahlen herangezogen werden.

Weiterhin beschreibt die DE19831262A1 ein Verfahren und eine Einrichtung zur Unterstützung des Fahrers eines Fahrzeuges bei einer Rückwärtsfahrt zur Beeinflussung der Fahrzeuggeschwindigkeit, wenn der Abstandswert einen bestimmten Wert unterschreitet. Die Fahrzeuggeschwindigkeit kann durch zeitliche Änderung der Signale des Abstandssensors bestimmt werden.

Die DE102008045481A1 beschreibt ein Verfahren und eine Vorrichtung zur Auslösung eines selbsttätigen Notbremsvorgangs eines Fahrzeugs, wobei die Fahrzeuggeschwindigkeit allein mittels der Drehzahlsignale von Raddrehzahlsensoren ermittelt wird.

Durch die beschriebenen Verfälschungen der Fahrzeuggeschwindigkeit kann unter Umständen zu Fehlbewertungen der Unfallgefahr kommen, was zu einem fehlerhaften vorzeitigen Beenden des Notbremseingriffs führen kann, wenn die Geschwindigkeit des eigenen Fahrzeuges fälschlicherweise als zu gering gemessen wird.

Der Erfindung liegt deshalb die Aufgabe zugrunde, auch während eines laufenden Notbremseingriffes die Geschwindigkeit des eigenen und des Vorderfahrzeuges exakt bestimmen zu können.

Diese Aufgabe wird durch die im Patentanspruch 1 enthaltene Erfindung gelöst.

Die Unteransprüche enthalten zweckmäßige Weiterbildungen.

Die Erfindung wird im Folgenden anhand einer Zeichnung näher erläutert.

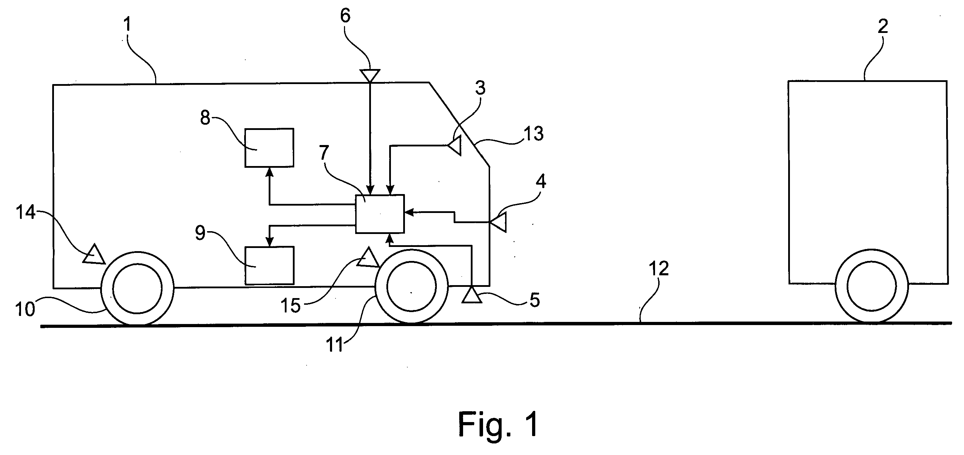

Die einzige Figur 1 der Zeichnung zeigt in schematischer Darstellung ein Straßenfahrzeug 1, welches sich auf einer Straßenoberfläche 12 bewegt. Vor dem Straßenfahrzeug 1 befindet sich ein Vorderfahrzeug 2.

Das Fahrzeug 1 hat Hinterräder 10 und Vorräder 11. Diese sind in an sich bekannter Weise mit Raddrehzahlsensoren (14, 15) ausgerüstet, welche ihre Signale an eine Fahrzeugelektronik, beispielsweise ein ABS, weiterleiten (nicht dargestellt). Von den insgesamt vier Raddrehzahlsensoren sind hier nur zwei gezeichnet.

Das dargestellte Fahrzeug 1 weist weiter eine CMS-Elektronik 7 auf. Diese dient in bekannter Weise zum Erkennen gefährlicher FahrSituationen und zur autonomen Bremsung des Fahrzeugs 1, falls eine solche Situation erkannt worden ist und der Fahrer nicht schnell genug reagiert (Collision Mitigation System CMS).

Hierzu weist das CMS unter anderem einen Abstandssensor 4 auf, welcher den Abstand zum Vorderfahrzeug 2 erkennt und der Elektronik 7 meldet. Als Abstandssensoren können geeignete bekannte Sensor-Systeme, wie z. B. Radar oder LIDAR, benutzt werden.

Zur redundanten Erkennung des Vorderfahrzeugs 2 oder auch anderer Hindernisse dient weiter eine Videokamera 3, die hinter einer Windschutzscheibe 13 angebracht ist. Die Signale der Videokamera 3 werden ebenfalls zur Elektronik 7 des CMS weitergeleitet. Die Elektronik 7 kann gegebenenfalls die Signale der Videokamera 3 und des Abstandssensors 4 mittels eines geeigneten Programms in bekannter Weise kombiniert auswerten (Sensorfusion).

Zur Feststellung der Geschwindigkeit des Fahrzeugs 1 werden der CMS-Elektronik 7 die oben erwähnten Radgeschwindigkeitssignale der Vorräder 11 und Hinterräder 10 zugeführt. Diese werden in bekannter Weise durch die Radsensoren (14, 15) abgefühlt.

Da, wie oben erläutert, bei ungünstigen Umständen die Radgeschwindigkeiten die Fahrzeuggeschwindigkeit nicht genau genug abbilden, wird erfindungsgemäß die Fahrzeuggeschwindigkeit zusätzlich durch Methoden ermittelt, die unabhängig von den Raddrehzahlen sind.

Vorteilhaft ist zur zusätzlichen Bestimmung der Fahrzeuggeschwindigkeit des Straßenfahrzeugs 1 ein optischer Sensor 5 vorgesehen, der unter dem Fahrzeug 1 angebracht ist und berührungslos die Straßenoberfläche 12 abtastet. Derartige Sensoren sind z. B. bekannt aus den Schriften DE 60 2004 009 422 T2, EP 1 964 736 A1, und DE 44 44 223 C5. Sie beleuchten die Straßenoberfläche z.B. mit einem Laserstrahl und werten das reflektierte Licht aus. Die genannten Sensoren sind zum einen in der Lage, die Straßenoberfläche dahingehend zu erkennen, ob diese trocken, nass, verschneit oder vereist ist. Sie können aber auch die Geschwindigkeit des Fahrzeugs 1 gegenüber der Straßenoberfläche 12 ermitteln.

Weiter kann die Fahrzeuggeschwindigkeit vorteilhaft mittels eines GPS-Sensors 6 ermittelt werden. Mit diesem lässt sich die Position des Fahrzeugs und damit auch seine Geschwindigkeit bestimmen. Die Signale des GPS-Sensors 6 werden ebenfalls der Elektronik 7 zugeführt.

Da eine Geschwindigkeitsbestimmung mittels eines GPS-Sensors normalerweise nicht genau bzw. schnell genug ist, ist es vorteilhaft, mittels der Elektronik 7 auch die Phasenverschiebungen der Trägerfrequenzen des GPS auszuwerten. Ein solches Verfahren ist z. B. in dem Aufsatz " On the relativistic Doppler Effects and high accuracy velocity determination using GPS " , presented at GNSS 2004, The 2004 International Symposium on GNSS/GPS, beschrieben.

Vorteilhaft kann die Fahrzeuggeschwindigkeit auch aus den Bildern der Videokamera 3 ermittelt werden. Hierzu werden durch ein geeignetes Auswertungsprogramm Bilddetails, welche zu feststehenden Gegenständen gehören, beispielsweise Spurmarkierungen oder Straßenbegrenzungspfosten, erkannt und ausgewertet.

Weiter vorteilhaft kann die Fahrzeuggeschwindigkeit auch aus den Signalen des Abstandssensors 4 ermittelt werden. Hierbei werden z.B. bei einem Radarsensor durch ein geeignetes Programm diejenigen Radarechos ausgewertet, welche von feststehenden Objekten, beispielsweise am Straßenrand stehenden Bäumen oder Fahrbahnbegrenzungspfosten, herrühren.

In der CMS-Elektronik 7 werden die Eingangssignale der oben beschriebenen zusätzlichen Sensoren 3, 5, 6 in an sich bekannter Weise ausgewertet und daraus eine Fahrzeuggeschwindigkeit berechnet. Dabei können die Signale verschiedener Sensoren auch kombiniert werden (Sensorfusion), um ein verlässliches Signal zu erhalten.

Aus den Sensordaten wird, wie oben erwähnt, innerhalb der CMS-Elektronik 7 ein Gefahrenpotential berechnet. Falls dieses bestimmte Schwellen überschreitet, wird eine Warnanzeige 8 betätigt, die sich im Fahrerhaus befindet, und einen eventuell unaufmerksamen Fahrer auf eine gefährliche Fahrsituation aufmerksam machen soll. Die Warnung kann dabei optisch, akkustisch oder haptisch erfolgen.

Falls eine rechtzeitige Reaktion des Fahrers zur Verhinderung eines Auffahrunfalls nicht mehr erfolgt bzw. nicht mehr möglich ist, wird gleichzeitig oder anschließend eine Bremsanlage 9 des Fahrzeugs angesteuert. Diese ist in der Lage, autonom, d. h. ohne Betätigung eines Bremspedals durch den Fahrer, das Fahrzeug 1 abzubremsen. Hierbei kann es sich um eine Teilbremsung oder um eine Vollbremsung handeln.

Das erfindungsgemäße Verfahren hat den Vorteil, dass zur Unterstützung der Radgeschwindigkeitssignale die Fahrzeuggeschwindigkeit zusätzlich auch durch weitere Sensoren überwacht wird, welche unabhängig von der Raddrehzahl sind. Hierdurch lässt sich die Fahrzeuggeschwindigkeit während einer autonomen Bremsung auch bei ungünstigen Umständen sicher ermitteln.

## Patentansprüche

1. Verfahren zur korrekten Durchführung von autonomen Notbremsungen bei einem Straßenfahrzeug (1) zur Verhinderung eines Auffahrunfalls oder zur Verminderung der Unfallschwere, wobei während der autonomen Notbremsung die Geschwindigkeit des Fahrzeugs (1) mittels Radsensoren (14, 15) ermittelt wird, und wobei der Raum vor dem Fahrzeug (1) mindestens mittels eines Abstandssensors (4) überwacht wird, und wobei als Abstandssensor (4) ein Radar-Sensor oder ein LIDAR-Sensor verwendet wird, **gekennzeichnet durch** eine zusätzliche Geschwindigkeitsermittlung, die unabhängig von den Raddrehzahlen ist, wobei die zusätzliche Geschwindigkeitsermittlung **durch** eine Auswertung der Signale des Abstandssensors (4) erfolgt und die Geschwindigkeit des Fahrzeugs (1) während einer autonomen Notbremsung, wenn die Radgeschwindigkeiten die Fahrzeuggeschwindigkeit nicht genau genug abbilden, **durch** die Auswertung der Signale des Abstandssensors (4) ermittelt wird.

2. Verfahren nach Anspruch 1, **dadurch gekennzeichnet, dass** der Raum vor dem Fahrzeug (1) zusätzlich mit einer Videokamera (3) überwacht wird.

3. Verfahren nach einem oder mehreren der Ansprüche 1 bis 2, **dadurch gekennzeichnet, dass** die zusätzliche Geschwindigkeitsermittlung mittels eines am Fahrzeug (1) angebrachten optischen Sensors (5) erfolgt, der berührungslos die Straßenoberfläche (6) abtastet.

4. Verfahren nach einem oder mehreren der Ansprüche 1 bis 3, **dadurch gekennzeichnet, dass** die zusätzliche Geschwindigkeitsermittlung mittels eines GPS-Sensors (7) erfolgt.

5. Verfahren nach Anspruch 4, **dadurch gekennzeichnet, dass** die Phasenverschiebungen der Trägerfrequenzen des GPS ausgewertet werden.

6. Verfahren nach einem oder mehreren der Ansprüche 1-5, **dadurch gekennzeichnet, dass** die zusätzliche Geschwindigkeitsermittlung durch eine Auswertung der Bilder der Videokamera (3) erfolgt.

## Claims

1. Method for correctly carrying out autonomous emergency braking in a road vehicle (1) for preventing a rear end accident or for reducing the severity of an accident, wherein the speed of the vehicle (1) is determined by means of wheel sensors (14, 15) during the autonomous emergency breaking, and wherein the space in front of the vehicle (1) is monitored at least by means of a distance sensor (4), and wherein a radar sensor or a LIDAR sensor is used as a distance sensor (4), **characterized by** additional determination of the speed which is carried out independently of the wheel speeds, wherein the additional determination of the speed is carried out by evaluating the signals of the distance sensor (4) and, if the wheel speeds do not map the vehicle speed precisely enough, the speed of the vehicle (1) is determined during autonomous emergency braking by evaluating the signals of the distance sensor (4).

2. Method according to Claim 1, **characterized in that** the space in front of the vehicle. (1) is additionally monitored with a video camera (3).

3. Method according to one or more of Claims 1 to 2, **characterized in that** the additional determination of the speed is carried out by means of an optical sensor (5) which is mounted on the vehicle (1) and which scans the surface (6) of the road in a contactless fashion.

4. Method according to one or more of Claims 1 to 3, **characterized in that** the additional determination of the speed is carried out by means of a GPS sensor (7).

5. Method according to Claim 4, **characterized in that** the phase shifts of the carrier frequencies of the GPS are evaluated.

6. Method according to one or more of Claims 1-5, **characterized in that** the additional determination of the speed is carried out by evaluating the images of the video camera (3).

## Revendications

1. Procédé de mise en oeuvre correcte de freinages d'urgence autonomes pour un véhicule routier (1) afin d'éviter un accident par tamponnage ou d'éviter un accident grave, dans lequel, pendant le freinage d'urgence autonome, la vitesse du véhicule (1) est calculée au moyen de capteurs de roue (14, 15) et dans lequel l'espace devant le véhicule (1) est surveillé au moins au moyen d'un capteur de distance (4), et dans lequel un capteur radar ou un capteur LIDAR est employé en tant que capteur de distance (4), **caractérisé par** un calcul supplémentaire de la vitesse qui est indépendant du nombre de tours des roues, dans lequel le calcul supplémentaire de la vitesse est effectué en évaluant les signaux du capteur de distance (4) et la vitesse du véhicule (1) est calculée pendant un freinage d'urgence autonome, lorsque les vitesses des roues n'illustrent pas suffisamment précisément la vitesse du véhicule, en évaluant les signaux du capteur de distance (4).

2. Procédé selon la revendication 1, **caractérisé en ce que** l'espace devant le véhicule (1) est en outre surveillé avec une vidéocaméra (3).

3. Procédé selon une ou plusieurs des revendications 1 à 2, **caractérisé en ce que** le calcul supplémentaire de la vitesse est effectué au moyen d'un capteur optique (5) disposé sur le véhicule (1) qui balaye sans contact la surface de la route (6).

4. Procédé selon une ou plusieurs des revendications 1 à 3, **caractérisé en ce que** le calcul supplémentaire de la vitesse est effectué au moyen d'un capteur GPS (7).

5. Procédé selon la revendication 4, **caractérisé en ce que** les décalages de phase des fréquences porteuses du GPS sont évalués.

6. Procédé selon une ou plusieurs des revendications 1 - 5, **caractérisé en ce que** le calcul supplémentaire de la vitesse est effectué en évaluant les images de la vidéocaméra (3).
